(19) Europäisches Patentamt
European Patent Office
Office européen des brevets

(11) **EP 0 847 852 A2**

(12) **EUROPÄISCHE PATENTANMELDUNG**

(43) Veröffentlichungstag:
**17.06.1998 Patentblatt 1998/25**

(51) Int. Cl.$^6$: **B32B 27/08**, B32B 27/20,
C08L 25/12, C08L 9/02,
C08L 51/06, B60R 13/00

(21) Anmeldenummer: **97121667.6**

(22) Anmeldetag: **09.12.1997**

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: **10.12.1996 DE 19651350
17.06.1997 DE 19725560**

(71) Anmelder:
**BASF AKTIENGESELLSCHAFT
67056 Ludwigshafen (DE)**

(72) Erfinder:
• **Grefenstein, Achim, Dr.
67122 Altrip (DE)**
• **Netze, Carsten, Dr.
69115 Heidelberg (DE)**
• **Zeltner, Doris, Dr.
67354 Römerberg (DE)**
• **Lindenschmidt, Gerhard, Dr.
69181 Leimen (DE)**

(74) Vertreter:
**Isenbruck, Günter, Dr. et al
Patent- und Rechtsanwälte Bardehle-
Pagenberg-Dost-Altenburg-Frohwitter-Geissler
& Partner
Theodor-Heuss-Anlage 12
68165 Mannheim (DE)**

(54) **Verbundschichtplatten oder -folien und Formkörper daraus**

(57)     Die Verbundschichtplatte oder -folie umfaßt

(1)     eine Substratschicht, enthaltend, bezogen auf die Summe der Mengen der Komponenten A und B, und gegebenenfalls C und/oder D, die insgesamt 100 Gew.-% ergibt,

a     1 bis 99 Gew.-% eines bestimmten Pfropfcopolymerisats als Komponente A,

b     1 bis 99 Gew.-% eines Copolymerisats aus

b1     40 bis 100 Gew.-% Einheiten des Styrols, eines substituierten Styrols oder eines (Meth)acrylsäureesters oder deren Gemische als Komponente B1,

b2     bis 60 Gew.-% des Acrylnitrils oder Methacrylnitrils als Komponente B2,
als Komponente B,

c     0 bis 80 Gew.-% Polycarbonate als Komponente C, und

d     0 bis 50 Gew.-% faser- oder teilchenförmige Füllstoffe oder deren Gemische als Komponente D,
und

(3)     eine transparente Deckschicht aus Polymethylmethacrylat.

EP 0 847 852 A2

**Beschreibung**

Die Erfindung betrifft Verbundschichtplatten oder -folien, Verfahren zu ihrer Herstellung, ihre Verwendung zur Herstellung von Formkörpern, Verfahren zur Herstellung dieser Formkörper und Formkörper daraus.

Beim Einsatz von Kunststoffen im Außenbereich, bei dem sie der Witterung und insbesondere UV-Strahlung ausgesetzt sind, werden hohe Anforderungen an die UV- und Witterungsbeständigkeit gestellt. Insbesondere beim Einsatz in Karosserie-Außenteilen im Fahrzeugbereich werden zudem hohe Anforderungen an die weiteren mechanischen Eigenschaften, wie die Tieftemperaturzähigkeit, wie auch an die optische Qualität gestellt. Die derzeit eingesetzten Verfahren bzw. Werkstoffe erfüllen diese Bedingungen nicht immer.

Karosserieteile aus Kunststoffen werden beispielsweise decklackiert oder in Masse eingefärbt und klarlackiert. Die Decklackierung erfordert dabei eine hohe Wärmeformbeständigkeit, die nur wenige Kunststoffe erfüllen. Eine Masseeinfärbung insbesondere mit Effektpigmenten ist kostenaufwendig und vermindert vielfach die mechanischen Eigenschaften des Substrates.

Anstelle einer Sprühlackierung können andere Beschichtungsverfahren, beispielsweise die Hinterspritztechnologie verwendet werden. Dazu werden Lackfolien durch Walzenbeschichtungs- oder Tiefdruckverfahren hergestellt und mit Trägermaterialien hinterspritzt oder hinterpreßt.

In J. H. Schut, Plastics World, Juli 1996, Seiten 48 bis 52 wird die Anwendung derartiger Lackfolien bei der Herstellung von Automobilteilen beschrieben. Polyvinylidenfluorid-Filme und Polyvinylfluorid-Filme werden beschrieben, die in Verbindung mit ABS als Substrate eingesetzt werden. Auch Polyvinylidenfluorid/Acrylat-Filme werden erwähnt. Auch thermoplastische Olefine können als Substrate eingesetzt werden. Als Herstellungsverfahren werden das Thermoformen, Thermoformen in Verbindung mit Spritzgießen und das Spritzgießen allein aufgeführt.

In der EP-B1-0 361 823 sind derartige Folien beschrieben, die aus Fluorpolymeren oder deren Gemischen mit Acrylaten bestehen. Sie werden mit härtbaren, mit Füllkörpern verstärkten Polyestermassen hinterpreßt. Die Schichten können auch Acrylnitril/Butadien/Styrol-Copolymere (ABS) enthalten.

Bislang finden alle bekannten Hinterspritzfolien nur für Effekteinfärbungen und mehrfarbige Dekore Verwendung, da die Folien sehr kostspielig sind.

In der US-A 5,192,609 sind Lackfolien für die Walzenbeschichtung eines thermoplastischen Trägermaterials beschrieben. Es werden bis zu 6-schichtige Folien auf ein Substrat aufgebracht. Als Substrate werden neben Polyolefinen auch ABS und Polyvinylchlorid aufgeführt.

Als oberste Schicht wird eine klare Beschichtung verwendet, die aus einem polymeren vernetzbaren Zweikomponentengemisch, beispielsweise auf Basis von Polyolen, besteht.

In der EP-B-0 522 240 sind mehrschichtige Kunststoffverbundfolien beschrieben, die eine Deckschicht auf der Basis von Polyvinylidenfluorid oder Polymethacrylsäuremethylester und ein Substrat aus einem Polyolefin aufweisen. Es wird die Coextrusion der Deckschicht mit anschließendem Extrusionsbeschichten mit dem Trägermaterial oder weiteren Schichten beschrieben.

Außerdem sind coextrudierte Platten aus Polymethylmethacrylat (PMMA) und ABS als Karosseriewerkstoff bekannt. Beispielsweise sind von H. Kappacher, in Kunststoffe 86 (1996), S. 388 bis 392 coextrudierte PMMA/ABS-Verbundplatten beschrieben. Die Karosserieteile werden dabei durch Coextrusion über eine Breitschlitzdüse zu Platten und anschließendes Thermoformen der Platten hergestellt. In manchen Anwendungen ist jedoch die Wärmealterungsbeständigkeit des ABS zu gering. Um das ABS oder ABS/PC vor dem UV-Licht zu schützen, müssen relativ dicke UV-absorbierende PMMA-Deckschichten eingesetzt werden. Zudem kann die Zähigkeit, die durch die spröde PMMA-Deckschicht vermindert ist, zu gering sein. Zudem nimmt der Oberflächenglanz bei Verstreckgraden ab 1:2 deutlich ab.

Das Coextrusionsverfahren unter Verwendung einer Breitschlitzdüse ist beispielsweise in der EP-A2-0 225 500 beschrieben.

Aufgabe der vorliegenden Erfindung ist die Bereitstellung von Verbundschichtplatten oder -folien sowie Formkörpern daraus, die gegenüber bekannten Platten, Folien oder Formkörpern eine überlegene UV- und Wärmealterungsbeständigkeit aufweisen. Zudem sollen hohe Verstreckungsgrade bei gleichbleibendem Oberflächenglanz zugänglich sein. Die Formkörper sollen kostengünstig herstellbar sein. Die Produkte sollen weiterhin eine verbesserte Bruchdehnung, Kältezähigkeit, Kratzfestigkeit und eine erhöhte Durchstoßarbeit aufweisen.

Die Aufgabe wird erfindungsgemäß gelöst durch Verbundschichtplatten oder -folien, umfassend

(1)  eine Substratschicht, enthaltend, bezogen auf die Summe der Mengen der Komponenten A und B, und gegebenenfalls C und/oder D, die insgesamt 100 Gew.-% ergibt,

a  1 bis 99 Gew.-% eines Pfropfcopolymerisats aus

a1  1 bis 99 Gew.-% einer teilchenförmigen Pfropfgrundlage A1 aus den Monomeren

a11    80 bis 99,99 Gew.-%, mindestens eines $C_{1-8}$-Alkylesters der Acrylsäure als Komponente A11,

a12    0,01 bis 20 Gew.-% mindestens eines polyfunktionellen vernetzenden Monomeren als Komponente A12,

a2    1 bis 99 Gew.-% einer Pfropfauflage A2 aus den Monomeren, bezogen auf A2,

a21    40 bis 100 Gew.-% Einheiten des Styrols, eines substituierten Styrols oder eines (Meth)acrylsäureesters oder deren Gemische als Komponente A21 und

a22    bis 60 Gew.-% Einheiten des Acrylnitrils oder Methacrylnitrils als Komponente A22,
wobei die Pfropfauflage A2 aus mindestens einer Pfropfhülle besteht und das Pfropfcopolymerisat eine mittlere Teilchengröße von 50 bis 1000 nm hat,
als Komponente A,

b    1 bis 99 Gew.-% eines Copolymerisats aus

b1    40 bis 100 Gew.-% Einheiten des Styrols, eines substituierten Styrols oder eines (Meth)acrylsäureesters oder deren Gemische als Komponente B1,

b2    bis 60 Gew.-% des Acrylnitrils oder Methacrylnitrils als Komponente B2,
als Komponente B,

c    0 bis 80 Gew.-% Polycarbonate als Komponente C, und

d    0 bis 50 Gew.-% faser- oder teilchenförmige Füllstoffe oder deren Gemische als Komponente D,
und

(3)    eine transparente Deckschicht aus Polymethylmethacrylat.

Die Aufgabe wird ferner gelöst durch Verbundschichtfolien, umfaßend in dieser Reihenfolge

(1')    eine Substratschicht, enthaltend eine Formmasse der Komponente (1), wie sie vorstehend beschrieben ist, ABS, Polycarbonat, Polybutylenterephthalat, Polyethylenterephthalat, Polyamid, Polyetherimid, Polyetherketon, Polyphenylensulfid, Polyphenylenether, oder Blends davon, mit einer Schichtdicke von 90 bis 990 µm,

(3')    eine transparente Deckschicht, enthaltend Polymethylmethacrylat, (PMMA), schlagzähes Polymethylmethacrylat (HI-PMMA), ABS, Polycarbonat (PC), Polyethylenterephthalat (PET), Styrol/Acrylnitril-Copolymere (SAN), Polyamid (PA), Polyethersulfon (PES) oder Polysulfon (PSU), mit einer Schichtdicke von 10 bis 100 µm, wobei die Substratschicht farbgebende Stoffe enthalten kann und diese enthält, wenn die Substratschicht und die Deckschicht aus den gleichen Formmassen aufgebaut sind, und wobei die Gesamtdicke der Verbundschichtfolie 100 bis 1000 µm beträgt.

Die erfindungsgemäßen Verbundschichtplatten oder Folien, sowie die daraus hergestellten Formkörper weisen eine gegenüber den bekannten Platten, Folien und Formkörpern verbesserte Durchstoßarbeit, und/oder Kältezähigkeit, Kratzfestigkeit, Bruchdehnung und ein besseres Verstreckverhalten bei gleichbleibendem Oberflächenglanz auf. Sie sind somit insbesondere für den Außeneinsatz geeignet, wo sie UV-Strahlung und Witterungseinflüssen ausgesetzt sind. Insbesondere kommt die Verwendung im Fahrzeugbereich in Betracht.
Die einzelnen Schichten bzw. Komponenten der Verbundschichtplatten oder -folien werden nachstehend beschrieben.

**Schicht (1)**

Schicht (1) ist aus den nachstehenden Komponenten A und B und gegebenenfalls C und/oder D, die insgesamt 100 Gew.-% ergeben, aufgebaut.
Komponente A ist ein Pfropfcopolymerisat aus

a1    1 bis 99 Gew.-%, vorzugsweise 55 bis 80 Gew.-%, insbesondere 55 bis 65 Gew.-%, einer teilchenförmigen Pfropfgrundlage A1 mit einer Glasübergangstemperatur unterhalb von 0°C,

a2    1 bis 99 Gew.-%, vorzugsweise 20 bis 45 Gew.-%, insbesondere 35 bis 45 Gew.-%, einer Pfropfauflage A2 aus den Monomeren, bezogen auf A2,

a21   40 bis 100 Gew.-%, vorzugsweise 65 bis 85 Gew.-%, Einheiten des Styrols, eines substituierten Styrols oder eines (Meth)acrylsäureesters oder deren Gemische, insbesondere des Styrols und/oder $\alpha$-Methylstyrols als Komponente A21 und

a22   bis 60 Gew.-%, vorzugsweise 15 bis 35 Gew.-%, Einheiten des Acrylnitrils oder Methacrylnitrils, insbesondere des Acrylnitrils als Komponente A22.

Die Pfropfauflage A2 besteht dabei aus mindestens einer Pfropfhülle, wobei das Pfropfcopolymerisat A insgesamt eine mittlere Teilchengröße von 50 bis 1000 nm aufweist.

Komponente A1 besteht dabei aus den Monomeren

a11   80 bis 99,99 Gew.-%, vorzugsweise 95 bis 99,9 Gew.-%, mindestens eines $C_{1-8}$-Alkylesters der Acrylsäure, vorzugsweise n-Butylacrylat und/oder Ethylhexylacrylat als Komponente A11,

a12   0,01 bis 20 Gew.-%, vorzugsweise 0,1 bis 5,0 Gew.-%, mindestens eines polyfunktionellen vernetzenden Monomeren, vorzugsweise Diallylphthalat und/oder DCPA als Komponente A12.

Gemäß einer Ausführungsform der Erfindung beträgt die mittlere Teilchengröße der Komponente A 50 bis 800 nm, vorzugsweise 50 bis 600 nm.

Gemäß einer weiteren erfindungsgemäßen Ausführungsform ist die Teilchengrößenverteilung der Komponente A bimodal, wobei 60 bis 90 Gew.-% eine mittlere Teilchengröße von 50 bis 200 nm und 10 bis 40 Gew.-% eine mittlere Teilchengröße von 50 bis 400 nm aufweisen, bezogen auf das Gesamtgewicht der Komponente A.

Als mittlere Teilchengröße beziehungsweise Teilchengrößenverteilung werden die aus der integralen Massenverteilung bestimmten Größen angegeben. Bei den erfindungsgemäßen mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z. und Z.-Polymere 250 (1972), Seiten 782 - 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, dem dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 beziehungsweise 90 Gew.-% der Teilchen bezogen sind. Der Quotient

$$\frac{d_{90} - d_{10}}{d_{50}} = Q$$

stellt ein Maß für die Verteilungsbreite der Teilchengröße dar. Als Komponente A erfindungsgemäß verwendbare Emulsionspolymerisate A weisen vorzugsweise Q-Werte kleiner als 0,5, insbesondere kleiner als 0,35 auf.

Bei den Acrylatkautschuken A1 handelt es sich vorzugsweise um Alkylacrylat-Kautschuke aus einem oder mehreren $C_{1-8}$-Alkylacrylaten, vorzugsweise $C_{4-8}$-Alkylacrylaten, wobei bevorzugt mindestens teilweise Butyl-, Hexyl-, Octyl- oder 2-Ethylhexylacrylat, insbesondere n-Butyl- und 2-Ethylhexylacrylat, verwendet wird. Diese Alkylacrylat-Kautschuke können bis zu 30 Gew.-% harte Polymere bildende Monomere, wie Vinylacetat, (Meth)acrylnitril, Styrol, substituiertes Styrol, Methylmethacrylat, Vinylether, einpolymerisiert enthalten.

Die Acrylatkautschuke enthalten weiterhin 0,01 bis 20 Gew.-%, vorzugsweise 0,1 bis 5 Gew.-%, an vernetzend wirkenden, polyfunktionellen Monomeren (Vernetzungsmonomere). Beispiele hierfür sind Monomere, die 2 oder mehr zur Copolymerisation befähigte Doppelbindungen enthalten, die vorzugsweise nicht in den 1,3-Stellungen konjugiert sind.

Geeignete Vernetzungsmonomere sind beispielsweise Divinylbenzol, Diallylmaleat, Diallylfumarat, Diallylphthalat, Diethylphthalat, Triallylcyanurat, Triallylisocyanurat, Tricyclodecenylacrylat, Dihydrodicyclopentadienylacrylat, Triallylphosphat, Allylacrylat, Allylmethacrylat. Als besonders günstiges Vernetzungsmonomer hat sich Dicyclopentadienylacrylat (DCPA) erwiesen (vgl. DE-C 12 60 135).

Bei der Komponente A handelt es sich um ein Pfropfcopolymerisat. Die Pfropfcopolymerisate A haben dabei eine mittlere Teilchengröße $d_{50}$ von 50 bis 1000 nm, bevorzugt von 50 bis 800 nm und besonders bevorzugt von 50 bis 600 nm. Diese Teilchengrößen können erzielt werden, wenn man als Pfropfgrundlage A1 dieser Komponente A Teilchengrößen von 50 bis 350 nm, bevorzugt von 50 bis 300 nm und besonders bevorzugt von 50 bis 250 nm verwendet.

Das Pfropfcopolymerisat A ist im allgemeinen ein- oder mehrstufig, das heißt ein aus einem Kern und einer oder mehreren Hüllen aufgebautes Polymerisat. Das Polymerisat besteht aus einer Grundstufe (Pfropfkern) A1 und einer oder - bevorzugt - mehreren darauf gepfropften Stufen A2 (Pfropfauflage), den sogenannten Pfropfstufen oder Pfropfhüllen.

Durch einfache Pfropfung oder mehrfache schrittweise Pfropfung können eine oder mehrere Pfropfhüllen auf die Kautschukteilchen aufgebracht werden, wobei jede Pfropfhülle eine andere Zusammensetzung haben kann. Zusätzlich zu den pfropfenden Monomeren können polyfunktionelle vernetzende oder reaktive Gruppen enthaltende Monomere mit aufgepfropft werden (s. z.B. EP-A 230 282, DE-AS 36 01 419, EP-A 269 861).

In einer bevorzugten Ausführungsform besteht Komponente A aus einem mehrstufig aufgebauten Pfropfcopolymerisat, wobei die Pfropfstufen im allgemeinen aus harzbildenden Monomeren hergestellt sind und eine Glastemperatur $T_g$ oberhalb von 30°C vorzugsweise oberhalb von 50°C haben. Der mehrstufige Aufbau dient unter anderem dazu, eine (Teil-)Verträglichkeit der Kautschukteilchen A mit dem Thermoplasten B zu erzielen.

Pfropfcopolymerisate A werden hergestellt beispielsweise durch Pfropfung von mindestens einem der im folgenden aufgeführten Monomeren A2 auf mindestens eine der vorstehend aufgeführten Pfropfgrundlagen bzw. Pfropfkernmaterialien A1.

Gemäß einer Ausführungsform der Erfindung ist die Pfropfgrundlage A1 aus 15 bis 99 Gew.-% Acrylatkautschuk, 0,1 bis 5 Gew.-% Vernetzer und 0 bis 49,9 Gew.-% eines der angegebenen weiteren Monomere oder Kautschuke zusammengesetzt.

Geeignete Monomere zur Bildung der Pfropfauflage A2 sind Styrol, $\alpha$-Methylstyrol, (Meth)acrylsäureester, Acrylnitril und Methacrylnitril, insbesondere Acrylnitril.

Gemäß einer Ausführungsform der Erfindung dienen als Pfropfgrundlage A1 vernetzte Acrylsäureester-Polymerisate mit einer Glasübergangstemperatur unter 0°C. Die vernetzten Acrylsäureester-Polymerisate sollen vorzugsweise eine Glasübergangstemperatur unter -20°C, insbesondere unter -30°C, besitzen.

In einer bevorzugten Ausführungsform besteht die Pfropfauflage A2 aus mindestens einer Pfropfhülle und die äußerste Pfropfhülle davon hat eine Glasübergangstemperatur von mehr als 30°C, wobei ein aus den Monomeren der Pfropfauflage A2 gebildetes Polymer eine Glasübergangstemperatur von mehr als 80°C aufweisen würde.

Geeignete Herstellverfahren für Pfropfcopolymerisate A sind die Emulsions-, Lösungs-, Masse- oder Suspensionspolymerisation. Bevorzugt werden die Pfropfcopolymerisate A durch radikalische Emulsionspolymerisation hergestellt in Gegenwart von Latices der Komponente A1 bei Temperaturen von 20°C bis 90°C unter Verwendung wasserlöslicher oder öllöslicher Initiatoren wie Peroxodisulfat oder Benzylperoxid, oder mit Hilfe von Redoxinitiatoren. Redoxinitiatoren eignen sich auch zur Polymerisation unterhalb von 20°C.

Geeignete Emulsionspolymerisationsverfahren sind beschrieben in den DE-A 28 26 925, 31 49 358 und in der DE-C 12 60 135.

Der Aufbau der Pfropfhüllen erfolgt vorzugsweise im Emulsionspolymerisationsverfahren, wie es beschrieben ist in DE-A 32 27 555, 31 49 357, 31 49 358, 34 14 118. Das definierte Einstellen der erfindungsgemäßen Teilchengrößen von 50 bis 1000 nm erfolgt bevorzugt nach den Verfahren, die beschrieben sind in der DE-C 12 60 135 und DE-A 28 26 925, beziehungsweise Applied Polymer Science, Band 9 (1965), Seite 2929. Das Verwenden von Polymerisaten mit unterschiedlichen Teilchengrößen ist beispielsweise bekannt aus DE-A 28 26 925 und US-A 5 196 480.

Gemäß dem in der DE-C 12 60 135 beschriebenen Verfahren wird zunächst die Pfropfgrundlage A1 hergestellt, indem der oder die gemäß einer Ausführungsform der Erfindung verwendeten Acrylsäureester und das mehrfunktionelle, die Vernetzung bewirkende Monomere, gegebenenfalls zusammen mit den weiteren Comonomeren, in wäßriger Emulsion in an sich bekannter Weise bei Temperaturen zwischen 20 und 100°C, vorzugsweise zwischen 50 und 80°C, polymerisiert werden. Es können die üblichen Emulgatoren, wie beispielsweise Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise verwendet man die Natriumsalze von Alkylsulfonaten oder Fettsäuren mit 10 bis 18 Kohlenstoffatomen. Gemäß einer Ausführungsform werden die Emulgatoren in Mengen von 0,5 bis 5 Gew.-%, insbesondere von 1 bis 2 Gew.-%, bezogen auf die bei der Herstellung der Pfropfgrundlage A1 eingesetzten Monomeren, eingesetzt. Im allgemeinen wird bei einem Gewichtsverhältnis von Wasser zu Monomeren von 2 : 1 bis 0,7 : 1 gearbeitet. Als Polymerisationsinitiatoren dienen insbesondere die gebräuchlichen Persulfate, wie beispielsweise Kaliumpersulfat. Es können jedoch auch Redoxsysteme zum Einsatz gelangen. Die Initiatoren werden im allgemeinen in Mengen von 0,1 bis 1 Gew.-%, bezogen auf die bei der Herstellung der Pfropfgrundlage A1 eingesetzten Monomeren, eingesetzt. Als weitere Polymerisationshilfsstoffe können die üblichen Puffersubstanzen, durch welche pH-Werte von vorzugsweise 6 bis 9 eingestellt werden, wie Natriumbicarbonat und Natriumpyrophosphat, sowie 0 bis 3 Gew.-% eines Molekulargewichtsreglers, wie Mercaptane, Terpinole oder dimeres $\alpha$-Methylstyrol, bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, daß der erhaltene Latex des vernetzten Acrylsäureesterpolymerisats einen $d_{50}$-Wert im Bereich von etwa 50 bis 1000 nm, vorzugsweise 50 bis 600 nm, besonders bevorzugt im Bereich von 80 bis 500 nm, besitzt. Die Teilchengrößenverteilung des Latex soll dabei vorzugsweise eng sein.

Zur Herstellung des Pfropfpolymerisats A wird sodann in einem nächsten Schritt in Gegenwart des so erhaltenen Latex des vernetzten Acrylsäureester-Polymerisats gemäß einer Ausführungsform der Erfindung ein Monomerengemisch aus Styrol und Acrylnitril polymerisiert, wobei das Gewichtsverhältnis von Styrol zu Acrylnitril in dem Monomerengemisch gemäß einer Ausführungsform der Erfindung im Bereich von 100 : 0 bis 40 : 60, vorzugsweise im Bereich von 65 : 35 bis 85 : 15, liegen soll. Es ist vorteilhaft, diese Pfropfcopolymerisation von Styrol und Acrylnitril auf das als Pfropfgrundlage dienende vernetzte Polyacrylsäureesterpolymerisat wieder in wäßriger Emulsion unter den üblichen, vorstehend beschriebenen Bedingungen durchzuführen. Die Pfropfcopolymerisation kann zweckmäßig im gleichen System erfolgen wie die Emulsionspolymerisation zur Herstellung der Pfropfgrundlage A1, wobei, falls notwendig, weiterer Emulgator und Initiator zugegeben werden kann. Das gemäß einer Ausführungsform der Erfindung aufzupfropfende Monomerengemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfcopolymerisation des Gemisches von Styrol und Acrylnitril in Gegenwart des vernetzenden Acrylsäureesterpolymerisats wird so geführt, daß ein Pfropfgrad von 1 bis 99 Gew.-%, vorzugsweise 20 bis 45 Gew.-%, insbesondere 35 bis 45 Gew.-%, bezogen auf das Gesamtgewicht der Komponente A, im Pfropfcopolymerisat A resultiert. Da die Pfropfausbeute bei der Pfropfcopolymerisation nicht 100% beträgt, muß eine etwas größere Menge des Monomerengemisches aus Styrol und Acrylnitril bei der Pfropfcopolymerisation eingesetzt werden, als es dem gewünschten Pfropfgrad entspricht. Die Steuerung der Pfropfausbeute bei der Pfropfcopolymerisation und somit des Pfropfgrades des fertigen Pfropfcopolymerisats A ist dem Fachmann geläufig und kann beispielsweise unter anderem durch die Dosiergeschwindigkeit der Monomeren oder durch Reglerzugabe erfolgen (Chauvel, Daniel, ACS Polymer Preprints 15 (1974), Seite 329 ff.). Bei der Emulsions-Pfropfcopolymerisation entstehen im allgemeinen etwa 5 bis 15 Gew.-%, bezogen auf das Pfropfcopolymerisat, an freiem, ungepfropftem Styrol/Acrylnitril-Copolymerisat. Der Anteil des Pfropfcopolymerisats A in dem bei der Pfropfcopolymerisation erhaltenen Polymerisationsprodukt wird nach der oben angegebenen Methode ermittelt.

Bei der Herstellung der Pfropfcopolymerisate A nach dem Emulsionsverfahren sind neben den gegebenen verfahrenstechnischen Vorteilen auch reproduzierbare Teilchengrößenveränderungen möglich, beispielsweise durch zumindest teilweise Agglomeration der Teilchen zu größeren Teilchen. Dies bedeutet, daß in den Pfropfcopolymerisaten A auch Polymere mit unterschiedlichen Teilchengrößen vorliegen können.

Vor allem die Komponente A aus Pfropfgrundlage und Pfropfhülle(n) kann für den jeweiligen Verwendungszweck optimal angepaßt werden, insbesondere in bezug auf die Teilchengröße.

Die Pfropfcopolymerisate A enthalten im allgemeinen 1 bis 99 Gew.-%, bevorzugt 55 bis 80 und besonders bevorzugt 55 bis 65 Gew.-% Pfropfgrundlage A1 und 1 bis 99 Gew.-%, bevorzugt 20 bis 45, besonders bevorzugt 35 bis 45 Gew.-% der Pfropfauflage A2, jeweils bezogen auf das gesamte Pfropfcopolymerisat.

## KOMPONENTE B

Komponente B ist ein Copolymerisat aus

b1    40 bis 100 Gew.-%, vorzugsweise 60 bis 85 Gew.-%, Einheiten des Styrols, eines substituierten Styrols oder eines (Meth)acrylsäureesters oder deren Gemische, insbesondere des Styrols und/oder $\alpha$-Methylstyrols als Komponente B1,

b2    bis 60 Gew.-%, vorzugsweise 15 bis 40 Gew.-%, Einheiten des Acrylnitrils oder Methacrylnitrils, insbesondere des Acrylnitrils als Komponente B2.

Gemäß einer bevorzugten Ausführungsform der Erfindung beträgt die Viskositätszahl der Komponente B 50 bis 90, vorzugsweise 60 bis 80.

Vorzugsweise ist Komponente B ein amorphes Polymerisat, wie es vorstehend als Pfropfauflage A2 beschrieben ist. Gemäß einer Ausführungsform der Erfindung wird als Komponente B ein Copolymerisat von Styrol und/oder $\alpha$-Methylstyrol mit Acrylnitril verwendet. Der Acrylnitrilgehalt in diesen Copolymerisaten der Komponente B beträgt dabei 0 bis 60 Gew.-%, vorzugsweise 15 bis 40 Gew.-%, bezogen auf das Gesamtgewicht der Komponente B. Zur Komponente B zählen auch die bei der Pfropfcopolymerisation zur Herstellung der Komponente A entstehenden freien, nicht gepfropften Styrol/Acrylnitril-Copolymerisate. Je nach den bei der Pfropfcopolymerisation für die Herstellung des Pfropfcopolymerisats A gewählten Bedingungen kann es möglich sein, daß bei der Pfropfcopolymerisation schon ein hinreichender Anteil an Komponente B gebildet worden ist. Im allgemeinen wird es jedoch erforderlich sein, die bei der Pfropfcopolymerisation erhaltenen Produkte mit zusätzlicher, separat hergestellter Komponente B abzumischen.

Bei dieser zusätzlichen, separat hergestellten Komponente B kann es sich vorzugsweise um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch als Gemisch für die Komponente B eingesetzt werden, so daß es sich bei der zusätzlichen, separat hergestellten Komponente B beispielsweise um ein Gemisch aus einem Styrol/Acrylnitril-Copolymerisat und einem α-Methylstyrol/Acrylnitril-Copolymerisat handeln kann. In dem Fall, in dem die Komponente B aus einem Gemisch aus einem Styrol/Acrylnitril-Copolymerisat und einem α-Methylstyrol/Acrylnitril-Copolymerisat besteht, sollte vorzugsweise der Acrylnitrilgehalt der beiden Copolymerisate um nicht mehr als 10 Gew.-%, vorzugsweise nicht mehr als 5 Gew.-%, bezogen auf das Gesamtgewicht des Copolymerisats, voneinander abweichen. Die Komponente B kann jedoch auch nur aus einem einzigen Styrol/Acrylnitril-Copolymerisat bestehen, wenn bei den Pfropfcopolymerisationen zur Herstellung der Komponente A als auch bei der Herstellung der zusätzlichen, separat hergestellten Komponente B von dem gleichen Monomergemisch aus Styrol und Acrylnitril ausgegangen wird.

Die zusätzliche, separat hergestellte Komponente B kann nach den herkömmlichen Verfahren erhalten werden. So kann gemäß einer Ausführungsform der Erfindung die Copolymerisation des Styrols und/oder α-Methylstyrols mit dem Acrylnitril in Masse, Lösung, Suspension oder wäßriger Emulsion durchgeführt werden. Die Komponente B hat vorzugsweise eine Viskositätszahl von 40 bis 100, bevorzugt 50 bis 90, insbesondere 60 bis 80. Die Bestimmung des Viskositätszahl erfolgt dabei nach DIN 53 726, dabei werden 0,5 g Material in 100 ml Dimethylformamid gelöst.

Das Mischen der Komponenten A und B und gegebenenfalls C, D, kann nach jeder beliebigen Weise nach allen bekannten Methoden erfolgen. Wenn die Komponenten A und B beispielsweise durch Emulsionspolymerisation hergestellt worden sind, ist es möglich, die erhaltenen Polymerdispersionen miteinander zu vermischen, darauf die Polymerisate gemeinsam auszufällen und das Polymerisatgemisch aufzuarbeiten. Vorzugsweise erfolgt jedoch das Abmischen der Komponenten A und B durch gemeinsames Extrudieren, Kneten oder Verwalzen der Komponenten, wobei die Komponenten, sofern erforderlich, zuvor aus der bei der Polymerisation erhaltenen Lösung oder wäßrigen Dispersion isoliert worden sind. Die in wäßriger Dispersion erhaltenen Produkte der Pfropfcopolymerisation (Komponente A) können auch nur teilweise entwässert werden und als feuchte Krümel mit der Komponente B vermischt werden, wobei dann während des Vermischens die vollständige Trocknung der Pfropfcopolymerisate erfolgt.

In einer bevorzugten Ausführungsform enthält die Komponente (1) neben den Komponenten A und B zusätzliche Komponenten C und/oder D, sowie ggf. weitere Zusatzstoffe, wie im folgenden beschrieben.

## KOMPONENTE C

Geeignete Polycarbonate C sind an sich bekannt. Sie haben vorzugsweise ein Molekulargewicht (Gewichtsmittelwert $M_W$, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Es können auch Copolycarbonate gemäß der US 3,737,409 verwendet werden; von besonderem Interesse sind dabei Copolycarbonate auf der Basis von Bisphenol A und Di-(3,5-dimethyl-dihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert $M_W$, bestimmt mittels Gelpermeationschromatographie in Tetrahydrofuran gegen Polystyrolstandards) der Polycarbonate C liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, daß die Polycarbonate C relative Lösungsviskositäten im Bereich von 1,1 bis 1,3, gemessen in 0,5 gew.-%iger lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate C können sowohl als Mahlgut als auch in granulierter Form eingesetzt werden. Sie liegen als Komponente C in Mengen von 0 bis 50 Gew.-%, bevorzugt von 10 bis 40 Gew.-%, jeweils bezogen auf die gesamte Formmasse, vor.

Der Zusatz von Polycarbonaten führt unter anderem zu höherer Thermostabilität und verbesserter Rißbeständigkeit der Platten, Folien und Formkörper.

## KOMPONENTE D

Als Komponente D enthält Komponente (1) 0 bis 50 Gew.-%, vorzugsweise 0 bis 40 Gew.-%, insbesondere 0 bis 30 Gew.-% faser- oder teilchenförmige Füllstoffe oder deren Mischungen, jeweils bezogen auf die gesamte Komponente 1. Dabei handelt es sich vorzugsweise um kommerziell erhältliche Produkte.

Verstärkungsmittel wie Kohlenstoffasern und Glasfasern werden üblicherweise in Mengen von 5 bis 50 Gew.-% verwendet, bezogen auf die gesamte Komponente (1).

Die verwendeten Glasfasern können aus E-, A- oder C-Glas sein und sind vorzugsweise mit einer Schlichte und einem Haftvermittler ausgerüstet. Ihr Durchmesser liegt im allgemeinen zwischen 6 und 20 $\mu$m. Es können sowohl Endlosfasern (rovings) als auch Schnittglasfasern (staple) mit einer Länge von 1 bis 10 $\mu$m, vorzugsweise 3 bis 6 $\mu$m, eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe z.B. nickelbeschichtete Glasfasern sowie andere Zuschlagstoffe, die elektromagnetische Wellen abschirmen, beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstoffasern, Ruß, insbesondere Leitfähigkeitsruß, oder nickelbeschichteten C-Fasern vermischt werden.

Die erfindungsgemäß verwendete Komponente (1) kann ferner weitere Zusatzstoffe enthalten, die für Polycarbonate, SAN-Polymerisate und Pfropfcopolymerisate oder deren Mischungen typisch und gebräuchlich sind. Als solche Zusatzstoffe seien beispielsweise genannt: Farbstoffe, Pigmente, Effektfarbmittel, Antistatika, Antioxidantien, Stabilisatoren zur Verbesserung der Thermostabilität, zur Erhöhung der Lichtstabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metallhalogenide (Chloride, Bromide, Iodide), die sich von Metallen der Gruppe I des Periodensystems der Elemente ableiten (wie Li, Na, K, Cu).

Geeignete Stabilisatoren sind die üblichen gehinderten Phenole, aber auch Vitamin E beziehungsweise analog aufgebaute Verbindungen. Auch HALS-Stabilisatoren (Hindered Amine Light Stabilizers), Benzophenone, Resorcine, Salicylate, Benzotriazole wie Tinuvin®P (UV-Absorber 2 - (2H-Benzotriazol-2-yl)-4-methylphenol der CIBA) und andere Verbindungen sind geeignet. Diese werden üblicherweise in Mengen bis zu 2 Gew.-% (bezogen auf das Gesamtgemisch) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage, die üblichen Mengen betragen 0,05 bis 5 Gew.-%. Pigmente, Farbstoffe, optische Aufheller, Effektfarbmittel, wie Titandioxid, Ruß, Eisenoxide, Phthalocyanine, Chinacridone, Perylene, Anthrachinone, Aluminiumflitter sind ebenfalls verwendbar.

Verarbeitungshilfsmittel und Stabilisatoren wie UV-Stabilisatoren, Schmiermittel und Antistatika werden üblicherweise in Mengen von 0,01 bis 5 Gew.-% verwendet.

Die Herstellung der Komponente (1) kann nach an sich bekannten Verfahren durch Mischen der Komponenten erfolgen. Es kann vorteilhaft sein, einzelne Komponenten vorzumischen. Auch das Mischen der Komponenten in Lösung und Entfernen der Lösungsmittel ist möglich.

Geeignete organische Lösungsmittel sind beispielsweise Chlorbenzol, Gemische aus Chlorbenzol und Methylenchlorid oder Gemische aus Chlorbenzol oder aromatischen Kohlenwasserstoffen, zum Beispiel Toluol.

Das Eindampfen der Lösungsmittelgemische kann beispielsweise in Eindampfextrudern erfolgen.

Das Mischen der zum Beispiel trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 bis 400°C, wobei die Komponenten notwendigenfalls zuvor aus der bei der Polymerisation erhaltenen Lösung oder aus der wäßrigen Dispersion isoliert worden sind.

Dabei können die Komponenten gemeinsam oder getrennt/nacheinander eindosiert werden.

In den erfindungsgemäßen Verbundschichtfolien ist Schicht (1') eine Substratschicht, die eine Formmasse der Komponente (1) wie sie vorstehend beschrieben ist, ABS, Polycarbonat, Polybutylenterephthalat (PBT), Polyethylenterephthalat, Polyamid, Polyetherimid (PEI), Polyetherketon (PEK), Polyphenylensulfid (PPS), Polyphenylenether oder Blends davon enthält. Die einzelnen Werkstoffe sind dabei bekannt, beispielsweise aus H. Domininghaus, Die Kunststoffe und ihre Eigenschaften, VDI-Verlag, Düsseldorf (1992). Vorzugsweise enthält die Substratschicht eine Formmasse der Komponente (1), ABS, Polycarbonat, Polybutylenterephthalat, Polyethylenterephthalat, Polyamid oder Blends davon. Sie kann auch aus diesen Polymeren im wesentlichen oder vollständig bestehen. Besonders bevorzugt enthält die Substratschicht (1') eine Formmasse der Komponente (1), ABS, Polycarbonat oder Polybutylenterephthalat, insbesondere eine Formmasse der Komponente (1). Sie kann auch im wesentlichen oder vollständig aus diesen Polymeren bestehen.

Die Schichtdicke beträgt vorzugsweise 100 bis 1000 µm, insbesondere 200 bis 500 µm.

**Schicht (2)**

Schicht (2) ist eine Farbträger- bzw. Zwischenschicht. Eine Ausführungsform der Erfindung betrifft eine Verbundschichtplatte oder -folie aus einer wie vorstehend beschriebenen Substratschicht (1), Deckschicht (3) und einer dazwischen liegenden Zwischenschicht (2), die aus schlagzähem PMMA, Polycarbonat oder der vorstehend beschriebenen Komponente (1) aufgebaut ist, die kein Polycarbonat enthält, sofern die Substratschicht (1) Polycarbonat enthält. Weisen sowohl Substratschicht als auch Zwischenschicht entweder Polycarbonat auf oder sind polycarbonatfrei, so liegt ein Zweischichtaufbau vor.

Die Erfindung betrifft außerdem Verbundschichtplatten oder -folien, umfassend

(2')     eine Schicht aus schlagzähem PMMA, Polycarbonat oder der vorstehenden Komponente (1), und

(3)     eine Deckschicht aus PMMA.
In diesem Fall kann die Schicht (2') die gleichen Komponenten wie die Zwischenschicht (2) aufweisen. Zusätzlich kann sie auch der Komponente (1) entsprechen, die Polycarbonat enthält.

Wird Polycarbonat als Zwischenschicht (2) oder als Schicht (2') verwendet, so kann das unter Komponente (1), Komponente C beschriebene Polycarbonat eingesetzt werden.

Schlagzähes PMMA (High Impact PMMA: HI-PMMA) ist ein Polymethylmethacrylat, das durch geeignete Zusätze schlagzäh ausgerüstet ist. Geeignete schlagzähmodifizierte PMMA sind beispielsweise beschrieben von M. Stickler, T. Rhein in Ullmann's encyclopedia of industrial chemistry Vol. A21, Seiten 473-486, VCH Publishers Weinheim, 1992, und H. Domininghaus, Die Kunststoffe und ihre Eigenschaften, VDI-Verlag Düsseldorf, 1992. Die Zwischenschicht (2) oder die Schicht (2') kann Effektfarbmittel enthalten. Dies sind beispielsweise Farbstoffe, Metallflocken oder Pigmente. Dabei können die Farbstoffe oder Pigmente organische oder anorganische Verbindungen sein.

Die Erfindung betrifft auch Verbundschichtfolien, die zwischen der Substratschicht (1') und der transparenten Deckschicht (3')
(2'') eine Zwischenschicht aus Polymethylmethacrylat, schlagzähem Polymethylmethacrylat, ABS, Polycarbonat, Polyethylenterephthalat, Styrol/Acrylnitril-Copolymeren, Polyamid, Polyethersulfon oder Polysulfon, die Effektfarbmittel enthält,
mit einer Schichtdicke von 50 bis 400, vorzugsweise 100 bis 300 µm, umfaßt. Vorzugsweise ist die Zwischenschicht (2'') aufgebaut wie die Schicht (2').

**Schicht (3)**

Schicht (3) der erfindungsgemäßen Verbundschichtplatten oder -folien ist eine Deckschicht aus PMMA. Das verwendete PMMA hat vorzugsweise ein Zahlenmittel des Molekulargewichts von 40.000 bis 100.000. Beispiele geeigneter PMMA-Formmassen sind Lucryl ® G88 bzw. G87 der Resart/BASF, sowie die in der EP-A2-0 225 500 beschriebenen Massen.

Die Schichtdicke der vorstehenden Verbundschichtplatten oder -folien beträgt vorzugsweise 100 µm bis 10 mm. Verbundschichtplatten weisen dabei besonders bevorzugt eine Schichtdicke von 3 bis 10 mm auf. Verbundschichtfolien weisen besonders bevorzugt eine Schichtdicke von 100 bis 500 µm auf.

In den Verbundschichtfolien aus der Substratschicht (1') und gegebenenfalls der Zwischenschicht (2'') enthält die transparente Deckschicht (3') Polymethylmethacrylat, schlagzähes Polymethylmethacrylat, ABS, Polycarbonat, Polyethylenterephthalat, Styrol/Acrylnitril-Copolymere, Polyamid, Polyethersulfon oder Polysulfon, mit einer Schichtdicke von 10 bis 100 µm.

Sie kann auch im wesentlichen oder vollständig aus diesen Polymeren bestehen. Vorzugsweise enthält die transparente Deckschicht (3') Polymethylmethacrylat, schlagzähes Polymethylmethacrylat, ABS, Polycarbonat, Polyethylenterephthalat oder Styrol/Acrylnitril-Copolymere. Insbesondere enthält sie Polymethylmethacrylat, schlagzähes Polymethylmethacrylat oder Polycarbonat, speziell Polymethylmethacrylat oder schlagzähes Polymethylmethacrylat. Sie kann auch im wesentlichen oder vollständig aus diesen Polymeren bestehen. Die Polymere werden so gewählt, daß sie zu einer transparenten Deckschicht führen.

## Schicht (0)

Schicht (0) ist eine Haftschicht aus einem Haftvermittler mit einer Schichtdicke von 5 bis 100 μm. Sie kann sich an der äußeren Fläche der Substratschicht befinden. Der Haftvermittler dient dazu, eine feste Verbindung mit einem gewählten Substrat herzustellen, das unter der Substratschicht zu liegen kommt (beispielsweise durch Hinterspritzen). Die Haftschicht wird dann verwendet, wenn die Haftung dieses weiteren Substrats an der Substratschicht unzureichend ist (beispielsweise bei Polyolefinsubstraten). Als Haftvermittler wird dabei ein üblicherweise für diese Materialkombination verwendeter Haftvermittler eingesetzt. Beispiele geeigneter Haftvermittler sind:

Ethylen-Vinylacetat-Copolymere zur Kopplung an Polyethylen und Maleinsäureanhydrid-gepfropfte Polypropylene zur Kopplung an Polypropylen. In beiden Fällen wird die Haftung durch das Einbringen polarer Gruppen in die unpolaren Polyolefine erreicht.

Verbundschichtplatten aus einer Substratschicht (1), einer Zwischenschicht (2) beziehungsweise einer Schicht (2') und einer Deckschicht (3) weisen vorzugsweise die folgenden Schichtdicken auf: Substratschicht (1) 3 bis 9,5 mm, besonders bevorzugt 3 bis 7 mm, insbesondere 3 bis 5 mm; Zwischenschicht (2) oder Schicht (2') 50 bis 500 μm, besonders bevorzugt 200 bis 400 μm; Deckschicht (3) 5 bis 300 μm, besonders bevorzugt 20 bis 100 μm. In einer besonders bevorzugten Ausführungsform hat die Substratschicht (1) eine Dicke von 3 bis 4 mm, die Zwischenschicht (2) bzw. Schicht (2') eine Dicke von 200 bis 300 μm und die Deckschicht (3) eine Dicke von 30 bis 70 μm.

Verbundschichtfolien aus einer Substratschicht (1'), gegebenenfalls eine Zwischenschicht (2"), einer Deckschicht (3') und gegebenenfalls einer Haftschicht (0) weisen vorzugsweise die folgenden Schichtdicken auf:

Substratschicht (1') 90 bis 990 μm; Zwischenschicht (2") 50 bis 400 μm; Deckschicht (3') 10 bis 100 μm; Haftschicht (0) 5 bis 100 μm. Die Gesamtdicke der Verbundschichtfolie beträgt dabei 100 bis 1000 μm, vorzugsweise 200 bis 800 μm.

Die Dreischichtplatte kann beispielsweise aus einer Verbundschichtfolie mit 2 Schichten (2') und (3) hergestellt werden, indem sie mit einer Substratschicht (1) versehen wird. Die Herstellung kann nach dem nachstehend beschriebenen Verfahren erfolgen. Dazu ist es vorteilhaft, daß das Größenverhältnis der MFI-Werte (melt flow index: Schmelzflußindex) der einzelnen Komponenten der Verbundschichtplatten oder -folien maximal 3:1, besonders bevorzugt maximal 2:1 beträgt. Somit beträgt der größte MFI-Wert einer der Komponenten (0), (1), (1'), (2), (2'), (3), (3') sofern sie in den jeweiligen Verbundschichtplatten oder -folien vorliegen, maximal das Dreifache, besonders bevorzugt maximal das Zweifache des niedrigsten MFI-Wertes. Hierdurch wird ein gleichmäßiges Fließverhalten aller in den Verbundschichtplanen oder -folien verwendeten Komponenten sichergestellt. Dieses aufeinander abgestimmten Fließverhalten ist insbesondere vorteilhaft bei den nachstehend beschriebenen Herstellungsverfahren.

Zum Schutz der Verbundschichtplatten oder -folien und Formkörper daraus bei der Herstellung, dem Transport oder der Verarbeitung kann auf die Außenseite der Deckschicht (3) beziehungsweise (3') eine Transportschutzfolie aufgebracht sein. Diese Folie läßt sich nach der Herstellung, dem Transport oder der Verarbeitung von der Platte oder Folie abziehen. Die Transportschutzfolie kann aus jedem geeigneten von der Deckschicht trennbaren Material hergestellt sein, beispielsweise PET oder Polyolefin. Die Schichtdicke beträgt vorzugsweise 20 bis 100 μm. Die Transportschutzfolie kann bei der Herstellung der Verbundschichtplatten oder -folien direkt aufextrudiert werden, oder sie wird aufkaschiert.

## Herstellverfahren der Verbundschichtplatten oder -folien

Die erfindungsgemäßen Verbundschichtplatten oder -folien können durch Adapter- oder Düsencoextrusion der Komponenten hergestellt werden. Insbesondere erfolgt die Adapter- oder Düsencoextrusion der jeweilig vorliegenden Komponenten (0) und/oder (1) und/oder (1') und/oder (2)/(2')/(2") und/oder (3)/(3'), wobei der gesamte Verbund in einem einstufigen Prozeß hergestellt wird.

Dabei werden die einzelnen Komponenten in Extrudern fließfähig gemacht und über spezielle Vorrichtungen so miteinander in Kontakt gebracht, daß die Verbundschichtplatten oder -folien mit der vorstehend beschriebenen Schichtfolge resultieren. Beispielsweise können die Komponenten durch eine Breitschlitzdüse coextrudiert werden. Dieses Verfahren ist in der EP-A2-0 225 500 erläutert.

Zudem können sie nach dem Adaptercoextrusionsverfahren hergestellt werden, wie es im Tagungsband der Fachtagung Extrusionstechnik "Coextrusion von Folien", 8./9. Oktober 1996, VDI-Verlag Düsseldorf, insbesondere Beitrag von Dr. Netze beschrieben ist. Dieses wirtschaftliche Verfahren kommt bei den meisten Coextrusionsanwendungen zum Einsatz.

Weiterhin können die erfindungsgemäßen Verbundschichtplatten und -folien durch Aufeinanderkaschieren von Folien oder Platten der Komponenten in einem beheizbaren Spalt hergestellt werden. Dabei werden insbesondere Folien oder Platten der Komponenten (0) und/oder (1)/(1') und/oder (2)/(2") und/oder (3)/(3') in einem beheizbaren Walzenspalt aufeinander kaschiert. Dabei werden zunächst Folien oder Platten der einzelnen Komponenten hergestellt. Dies kann nach bekannten Verfahren erfolgen. Sodann wird die gewünschte Schichtfolge durch entsprechendes Übereinanderlegen der Folien oder Platten hergestellt, worauf diese durch einen beheizbaren Walzenspalt geführt werden und unter Druck- und Wärmeeinwirkung zu einer Verbundschichtplatte oder -folie verbunden werden.

Insbesondere beim Adaptercoextrusionsverfahren ist eine Abstimmung der Fließeigenschaften der einzelnen Komponenten vorteilhaft für die Ausbildung gleichmäßiger Schichten in den Verbundschichtplatten oder -folien.

Die Verbundschichtplatten oder -folien können zur Herstellung von Formkörpern verwendet werden. Dabei sind beliebige Formkörper zugänglich. Besonders bevorzugt werden die Verbundschichtplatten oder -folien zur Herstellung von Formkörpern verwendet, bei denen es auf sehr gute Oberflächeneigenschaften, eine hohe Witterungsbeständigkeit sowie gute UV-Beständigkeit ankommt. Die Oberflächen sind zudem sehr kratzfest und haftfest, so daß eine Zerstörung der Oberflächen durch Zerkratzen oder Ablösen der Oberflächen zuverlässig verhindert wird. Somit sind Formkörper zur Verwendung im Außenbereich außerhalb von Gebäuden ein bevorzugtes Anwendungsgebiet. Insbesondere werden die Verbundschichtplatten oder -folien zur Herstellung von Kraftfahrzeugteilen, speziell Kraftfahrzeugteilen für Außenanwendungen im Fahrzeugbereich eingesetzt. Hierbei kommen beispielsweise die Herstellung von Kotflügeln, Türverkleidungen, Stoßstangen, Spoilern, Schürzen, wie auch Außenspiegeln in Betracht.

Die erfindungsgemäßen Verbundschichtplatten oder -folien werden mit besonderem Vorteil zur Herstellung von eingefärbten Formkörpern, speziell Formkörpern für Außenanwendungen im Fahrzeugbereich eingesetzt.

Formkörper aus Verbundschichtplatten, die aus einer Substratschicht (1) und einer Deckschicht (3) bestehen, weisen bereits die vorstehend aufgeführten sehr guten Oberflächeneigenschaften auf. Zur Herstellung farbiger Formteile kann die Substratschicht und gegebenenfalls die Deckschicht mit farbgebenden Stoffen, wie Farbstoffen oder Pigmenten oder Metallflocken oder Metallpulvern eingefärbt werden. Besonders vorteilhaft ist zur Herstellung von farbigen Formkörpern die Verwendung von Verbundschichtplatten mit drei Schichten. Dabei genügt es, wenn nur die Zwischenschicht (2) beziehungsweise (2') oder (2") eingefärbt wird. Das Einfärben ist wiederum mit allen geeigneten farbgebenden Stoffen möglich. Die Deckschicht dient dabei zum Schutz der Zwischenschicht und zum Erhalt der gewünschten Oberflächeneigenschaften. Die voluminöse Substratschicht muß nicht dabei eingefärbt werden, so daß eine sehr gute Einfärbung mit einer geringen Menge an farbgebenden Stoffen möglich ist. Somit können auch kostspielige farbgebende Stoffe verwendet werden, da ihre Konzentration gering bleiben kann. Insbesondere bei Verwendung von HI-PMMA und Polycarbonat als Zwischenschicht können Tiefenwirkungen (Flop-Effekte) realisiert werden. Zudem sind alle anderen Arten spezieller Farbgebungen möglich, wie Metallic- und Effekteinfärbungen.

Die Herstellung von Formkörpern aus den Verbundschichtplatten oder -folien kann nach bekannten Verfahren erfolgen. Beispielsweise können Verbundschichtplatten mit dem Dreischichtaufbau aus Substratschicht, Zwischenschicht und Deckschicht bzw. dem Zweischichtaufbau aus Substratschicht und Deckschicht durch Thermoformen hergestellt werden. Dabei können sowohl Positiv- wie auch Negativ-Thermoformverfahren eingesetzt werden. Entsprechende Verfahren sind dem Fachmann bekannt. Die erfindungsgemäßen Verbundschichtplatten werden dabei im Thermoformverfahren verstreckt. Da der Glanz- beziehungsweise die Oberflächenqualität der erfindungsgemäßen Verbundschichtplatten bei hohen Verstreckungsverhältnissen, beispielsweise bis zu 1:5 nicht mit der Verstreckung abnimmt, sind die Thermoformverfahren nahezu keinen für die Praxis relevanten Beschränkungen in bezug auf die mögliche Verstreckung ausgesetzt.

Aus den Verbundschichtplatten oder -folien, die aus einer Schicht (2') und einer Deckschicht (3) aufgebaut sind, können Formkörper durch Thermoformen der Verbundschichtplatte oder -folie und anschließendes Hinterspritzen mit einer Komponente (1) oder einem Polyurethanschaum hergestellt werden. Es wird somit zunächst die Verbundschichtplatte oder -folie in die gewünschte Form gebracht und sodann hinterspritzt. Die eingesetzten Folien können auch als Hinterspritzfolien bezeichnet werden. Insbesondere durch das Thermoformen von Hinterspritzfolien und anschließendes Verspritzen sind sehr komplexe Formkörper herstellbar. Dieses Verfahren ist auch als Insert-Hinterspritzen (insert moulding) bekannt.

Aus den Verbundschichtfolien der Schichten (0), (1'), gegebenenfalls (2") und (3') können Formkörper hergestellt werden durch Hinterspritzen oder Hintergießen der Verbundschichtfolien mit Komponente (1'), vorzugsweise ABS, PC/ASA, PC/PBT oder auch PP oder PE bei Verwendung einer Haftschicht, oder einem Polyurethanschaum, wobei die Verbundschichtfolie vorher thermogeformt werden kann, oder durch Kaschieren eines Formkörpers aus einer der vorstehenden Komponenten oder einem Polyurethanschaum mit der Verbundschichtfolie.

Die Erfindung betrifft auch die Formkörper aus verformten Verbundschichtplatten oder -folien, die gegebenenfalls hinterspritzt sind. Die Formkörper aus den Verbundschichtplatten oder -folien werden mit Komponente (1') oder einem Polyurethanschaum hinterspritzt oder hintergossen, oder ein Formkörper aus der Komponente (1') oder einem Polyurethanschaum wird mit der Verbundschichtfolie kaschiert.

Die Formkörper stammen dabei vorzugsweise aus dem Kraftfahrzeugbereich, insbesondere sind sie Kraftfahrzeugkarosserieaußenteile. Sie können dabei kleinere Kraftfahrzeugkarosserieaußenteile, wie Spiegel oder Verblendungen sein, sie können jedoch auch großflächige Karosserieaußenteile sein, beispielsweise Kotflügel, Hauben, Abdeckungen, Türen und so weiter. Es kann sich auch um Stoßstangen beziehungsweise Stoßfänger handeln. Dabei kann insbesondere das Hinterspritzen mit Polyurethan beispielsweise zu Stoßstangen bzw. Stoßfängern führen, die sehr gute Stoßdämpfungseigenschaften aufweisen.

Die Formkörper sind allgemein im gesamten Kraftfährzeugbereich verwendbar.

Die erfindungsgemäßen Formkörper weisen, insbesondere gegenüber Formkörpern, in denen eine ABS-Substratschicht verwendet wird, die nachstehenden Vorteile auf:

- geringer Zähigkeitsverlust der PMMA-Deckschicht bei Verwendung der erfindungsgemäßen Substratschicht (Komponente 1) im Vergleich zum ABS-Substrat

- erhöhte Kratzfestigkeit der PMMA-Schicht, die auch durch die unterhalb der Deckschicht liegende Substratschicht beeinflußt wird.

- effektive Verhinderung der Bildung von Rissen in der PMMA-Deckschicht durch schlagzähe Zwischenschicht und/oder schlagzähe Substratschicht

- es können dünnere PMMA-Deckschichten eingesetzt werden, ohne daß die Substratschicht ihre UV-Beständigkeit einbüßt

- die Formkörper weisen sehr gute Eigenschaften in bezug auf Kältezähigkeit, Bruchdehnung, Oberflächenglanz auf

- die Verbundschichtplatten oder -folien können tiefgezogen werden, wobei der Glanz selbst bei hohen Verstreckgraden gleichbleibt (insbesondere im Positivthermoformverfahren)

- kostengünstige Einfärbungen sind durch Einfärben der dünnen Zwischenschicht möglich

- Tiefenwirkung (Flop-Effekt) in der Zwischenschicht, insbesondere aus HI-PMMA oder Polycarbonat ist realisierbar

- kostengünstige Herstellung im Adapter-Coextrusionsverfahren ist insbesondere bei Auswahl von Komponenten mit ähnlichen Fließeigenschaften möglich

- auch hochviskose und kratzfeste PMMA-Typen können zusammen mit hochviskosen anderen Komponenten coextrudiert werden

- Formkörper, die in der Substratschicht Polycarbonate enthalten, sind sehr wärmeformbeständig und besonders schlagzäh

- keine Verwendung von Lösungsmitteln bei der Farbgebung mit den Verbundschichtfolien.

Die Erfindung wird nachstehend anhand von Beispielen näher erläutert.

In den Beispielen wurden coextrudierte Platten eingesetzt, in denen die Substratschicht 3,7 mm dick war. Die Zwischenschicht, sofern sie verwendet wurde, wies eine Dicke von 0,25 mm auf. Die Deckschicht wies eine Dicke von 0,05 mm auf.

Dabei kamen unterschiedliche Werkstoffe zum Einsatz, wie PMMA, ABS, HI-PMMA und Komponente (1). Komponente (1) ohne Polycarbonat bestand dabei aus einem teilchenförmigen Pfropfcopolymerisat mit einer Pfropfgrundlage, die aus n-Butylacrylat und einem Vernetzer aufgebaut war, und einer Pfropfauflage aus Styrol- und Acrylnitrileinheiten. Das Pfropfcopolymerisat lag in einer Matrix aus einem Styrol/Acrylnitril-Copolymerisat vor. Zudem wurde Komponente (1) auch mit einem Anteil an Polycarbonat als weiterer Matrix-Komponente eingesetzt.

Für die Verringerung der Durchstoßarbeit durch die Aufbringung der PMMA-Schichten ergaben sich, prozentual bezogen auf die Substratwerte, die nachstehend aufgeführten Werte. Dabei wurde sowohl auf die Deckseite als auch die Rückseite der coextrudierten Platten geschlagen. Die Ergebnisse sind in Tabelle 1 zusammengefaßt.

Tabelle 1

| Änderung der Durchstoßarbeit durch PMMA-Schichten, Wert in %, bezogen auf die Durchstoßarbeit des Substrats | | |
|---|---|---|
| Platte aus | Deckseite | Rückseite |
| PMMA/HI-PMMA/Komponente (1) mit Polycarbonat | 70 | 51 |
| PMMA/Komponente (1)/K omponente (1) mit Polycarbonat | 102 | 62 |
| PMMA/Polycarbonat/K omponente (1) mit Polycarbonat | 84 | 50 |
| PMMA/ABS | 54 | 52 |

Aus den Ergebnissen der Tabelle 1 geht hervor, daß die erfindungsgemäßen Platten eine gegenüber den Substratwerten entweder erhöhte oder nur geringfügig verminderte Durchstoßarbeit aufweisen im Vergleich zu den auf ABS basierenden Platten.

Weiterhin wurde die Kältezähigkeit entsprechender coextrudierter Platten untersucht. Es wurde die Durchstoßarbeit bei minus 30°C bestimmt. Es ergaben sich die in der nachstehenden Tabelle 2 angegebenen Werte.

Tabelle 2

| Platte aus | Durchstoßbarkeit [Nm] - 30°C |
|---|---|
| PMMA/HI-PMMA/Komponente (1) mit Polycarbonat | 21,3 |
| PMMA/Komponente (1)/Komponente (1) mit Polycarbonat | 26,3 |
| PMMA/Polycarbonat/Komponente (1) mit Polycarbonat | 31,7 |
| PMMA/Komponente (1) | 10,6 |
| PMMA/ABS | 6,8 |

Aus den Ergebnissen der Tabelle 2 geht hervor, daß die erfindungsgemäßen Platten eine deutlich höhere Durchstoßarbeit gegenüber den bekannten Platten mit ABS als Substrat aufweisen. Insbesondere der Dreischichtaufbau führt zu wesentlich höheren Kältezähigkeiten.

Weiterhin wurde die Bruchdehnung unter Zug-Biege-Beanspruchung gemessen. Dabei wurde die Bruchdehnung in Längs- und Querrichtung zur ursprünglichen Extrusionsrichtung der Platten bestimmt. Die Ergebnisse sind in der nachstehenden Tabelle 3 angegeben.

Tabelle 3

| Platte aus | Bruchdehnung [%] längs | Bruchdehnung [%] quer |
|---|---|---|
| PMMA/HI-PMMA/Komponente (1) mit Polycarbonat | 5,9 | 4,3 |
| PMMA/Polycarbonat/K omponente (1) mit Polycarbonat | 34,7 | 21,3 |
| PMMA/Komponente (1)/K omponente (1) mit Polycarbonat | 8,1 | 8,1 |
| PMMA/ABS | 4,6 | 3,8 |

Aus den Ergebnissen der Tabelle 3 geht hervor, daß die Bruchdehnung für die erfindungsgemäßen Platten wesentlich höher ist als für die Vergleichsplatte.

Weiterhin wurde die Kratzfestigkeit der erfindungsgemäßen Verbundschichtfolien untersucht. Dabei wurde wie folgt vorgegangen:

Mit einem "Scratch-Tester" wurden je Probenplatte 10 Kratzer von je 6 m Länge in einem Abstand von je 1 mm aufgebracht. Dazu wurde eine Diamantspitze mit einem spitzen Winkel von 120 Grad und einem Radius von 0,2 mm mit einer Auflagekraft von 2,6 N über die Probe bewegt. Anschließend wurde die Oberflächentopographie mit einem mechanischen Abtaster (Hommel-Tester) senkrecht zur Kratzrichtung vermessen. Die Tiefe der Riefen, als Differenz zur Probenoberfläche gemesssen, wird dabei als Maß für die Kratzfestigkeit angesehen.

Die Messungen wurden bei Raumtemperatur durchgeführt. Es ergaben sich die in der nachstehenden Tabelle 4 angegebenen Ergebnisse:

Tabelle 4

| Verbundschichtfolien | Kratztiefe |
|---|---|
| PMMA/HI-PMMA (50 µm/250 µm) | 0,5 µm |
| PMMA/ASA (50 µm/450 µm) | 2,7 µm |
| PVDF-Folie | 5,5 µm |

Aus den Ergebnissen der Tabelle 4 geht hervor, daß die Kratzfestigkeit für die erfindungsgemäßen Verbundschichtfolien wesentlich höher ist als für die üblicherweise eingesetzte PVDF-Folie.

Zudem wurde der Oberflächenglanz vor und nach einer Bewitterung gemessen. Die Bestimmung erfolgte dabei gemäß DIN 67530. Die Ergebnisse sind in der nachstehenden Tabelle 5 angegeben.

Tabelle 5

| Platte aus | unbewittert | nach 500 h |
|---|---|---|
| PMMA/MI-PMMA/Komponente | 81,1 | 84,1 |
| PMMA/Komponente (1) | 79,7 | 85,4 |
| ABS | 56,5 | 49,5 |
| Komponente (1) | 78,1 | 69,6 |

Aus den Ergebnissen der Tabelle 5 geht hervor, daß die erfindungsgemäßen Platten einen wesentlichen besseren Oberflächenglanz aufweisen im Vergleich zu den Platten, die keine Deckschicht aus PMMA aufweisen.

**Patentansprüche**

1. Verbundschichtplatte oder -folie, umfassend

   (1) eine Substratschicht, enthaltend, bezogen auf die Summe der Mengen der Komponenten A und B, und gegebenenfalls C und/oder D, die insgesamt 100 Gew.-% ergibt,

   a      1 bis 99 Gew.-% eines Pfropfcopolymerisats aus

   a1      1 bis 99 Gew.-% einer teilchenförmigen Pfropfgrundlage A1 aus den Monomeren

   a11      80 bis 99,99 Gew.-%, mindestens eines $C_{1-8}$-Alkylesters der Acrylsäure als Komponente A11,

   a12      0,01 bis 20 Gew.-% mindestens eines polyfunktionellen vernetzenden Monomeren als Komponente A12,

   a2      1 bis 99 Gew.-% einer Pfropfauflage A2 aus den Monomeren, bezogen auf A2,

   a21      40 bis 100 Gew.-% Einheiten des Styrols, eines substituierten Styrols oder eines (Meth)acrylsäureesters oder deren Gemische als Komponente A21 und

   a22      bis 60 Gew.-% Einheiten des Acrylnitrils oder Methacrylnitrils als Komponente A22,
   wobei die Pfropfauflage A2 aus mindestens einer Pfropfhülle besteht und das Pfropfcopolymerisat eine mittlere Teilchengröße von 50 bis 1000 nm hat,
   als Komponente A,

   b      1 bis 99 Gew.-% eines Copolymerisats aus

b1    40 bis 100 Gew.-% Einheiten des Styrols, eines substituierten Styrols oder eines (Meth)acrylsäureesters oder deren Gemische als Komponente B1,

b2    bis 60 Gew.-% des Acrylnitrils oder Methacrylnitrils als Komponente B2,
als Komponente B,

c    0 bis 80 Gew.-% Polycarbonate als Komponente C, und

d    0 bis 50 Gew.-% faser- oder teilchenförmige Füllstoffe oder deren Gemische als Komponente D, und

(3)    eine transparente Deckschicht aus Polymethylmethacrylat.

**2.** Verbundschichtplatte oder -folie nach Anspruch 1, umfassend zusätzlich zwischen der Deck- und der Substratschicht

(2)    eine Zwischenschicht aus schlagzähmodifiziertem Polymethylmethacrylat, Polycarbonat oder einer Formmasse der Komponente (1) gemäß Anspruch 1 ohne Polycarbonat, wenn Komponente (1) Polycarbonat enthält.

**3.** Verbundschichtplatte oder -folie, umfassend

(2')    eine Schicht aus schlagzähmodifiziertem Polymethylmethacrylat, Polycarbonat oder einer Formmasse der Komponente (1) gemäß Anspruch 1,
und

(3)    eine transparente Deckschicht aus Polymethylmethacrylat.

**4.** Verbundschichtplatte oder -folie nach einem der Ansprüche 1 bis 3 mit einer Gesamtdicke von 100 μm bis 10 mm.

**5.** Verbundschichtfolie, umfassend in dieser Reihenfolge

(1')    eine Substratschicht, enthaltend eine Formmasse der Komponente (1) gemäß Anspruch 1, ABS, Polycarbonat, Polybutylenterephthalat, Polyethylenterephthalat, Polyamid, Polyetherimid, Polyetherketon, Polyphenylensulfid, Polyphenylenether oder Blends davon, mit einer Schichtdicke von 90 bis 990 μm,

(3')    eine transparente Deckschicht, enthaltend Polymethylmethacrylat, schlagzähes Polymethylmethacrylat, ABS, Polycarbonat, Polyethylenterephthalat, Styrol/Acrylnitril-Copolymere, Polyamid, Polyethersulfon oder Polysulfon, mit einer Schichtdicke von 10 bis 100 μm, wobei die Substratschicht Effektfarbmittel enthalten kann und diese enthält, wenn die Substratschicht und die Deckschicht aus den gleichen Formmassen aufgebaut sind, und wobei die Gesamtdicke der Verbundschichtfolie 100 bis 1000 μm beträgt.

**6.** Verbundschichtfolie nach Anspruch 5, umfassend zusätzlich zwischen Deck- und der Substratschicht

(2")    eine Zwischenschicht aus Polymethylmethacrylat, schlagzähem Polymethylmethacrylat, ABS, Polycarbonat, Polyethylenterephthalat, Styrol/Acrylnitril-Copolymeren, Polyamid, Polyethersulfon oder Polysulfon, die Effektfarbmittel enthält, mit einer Schichtdicke von 50 bis 400 μm.

**7.** Verbundschichtfolie nach Anspruch 5 oder 6, umfassend zusätzlich an der äußeren Fläche der Substratschicht

(0)    eine Haftschicht aus einem Haftvermittler mit einer Schichtdicke von 5 bis 100 μm.

**8.** Verbundschichtplatte oder -folie nach einem der Ansprüche 1 bis 7, wobei das Verhältnis der MFI-Werte der einzelnen Komponenten der Verbundschichtplatten oder -folien maximal 3:1 beträgt.

**9.** Verfahren zur Herstellung von Verbundschichtplatten oder -folien nach einem der Ansprüche 1 bis 8 durch Adapter- oder Düsencoextrusion der jeweiligen Komponenten (0) und/oder (1)/(1') und/oder (2)/(2')/(2") und/oder (3)/(3'), wobei der gesamte Verbund in einem einstufigen Prozeß hergestellt wird.

10. Verfahren zur Herstellung von Verbundschichtplatten oder -folien nach einem der Ansprüche 1 bis 8 durch Aufeinanderkaschieren von Folien oder Platten der Komponenten (0) und/oder (1)/(1') und/oder (2)/(2')/(2") und/oder (3)/(3') in einem beheizbaren Walzenspalt.

11. Verwendung von Verbundschichtplatten oder -folien nach einem der Ansprüche 1 bis 8 bei der Herstellung von Formkörpern.

12. Verfahren zur Herstellung von Formkörpern aus Verbundschichtplatten nach Anspruch 1, 2 oder einem auf diese Ansprüche zurückbezogenen Anspruch durch Thermoformen der Verbundschichtplatten.

13. Verfahren zur Herstellung von Formkörpern aus Verbundschichtplatten oder -folien nach einem der Ansprüche 3, 5, 6, 7 oder einem auf diese Ansprüche zurückbezogenen Ansprüche durch Thermoformen der Verbundschichtplatten oder -folien und Hinterspritzen mit Komponente (1) gemäß Anspruch 1 oder einem Polyurethanschaum.

14. Verfahren zur Herstellung von Formkörpern aus Verbundschichtfolien nach einem der Ansprüche 5, 6, 7, oder 8 mit Rückbezug auf einen dieser Ansprüche durch Hinterspritzen oder Hintergießen der Verbundschichtfolien mit Komponente (1') gemäß Anspruch 5 oder einem Polyurethanschaum, wobei die Verbundschichtfolie vorher thermogeformt werden kann, oder durch Kaschieren eines Formkörpers aus der Komponente gemäß Anspruch 5 oder einem Polyurethanschaum mit der Verbundschichtfolie.

15. Formkörper aus verformten Verbundschichtplatten nach einem der Ansprüche 1, 2 oder einem auf diese Ansprüche zurückbezogenen Anspruch.

16. Formkörper aus verformten Verbundschichtplatten oder -folien nach einem der Ansprüche 3, 5, 6, 7 oder einem auf diese zurückbezogenen Anspruch, die mit Komponente (1') gemäß Anspruch 5 oder einem Polyurethanschaum hinterspritzt oder hintergossen sind, oder wobei ein Formkörper aus der Komponente (1') gemäß Anspruch 5 oder einem Polyurethanschaum mit der Verbundschichtfolie kaschiert ist.

17. Formkörper nach Anspruch 12 oder 13 in Form von Kraftfahrzeugkarosserieaußenteilen.

18. Verbundschichtplatte oder -folie nach einem der Ansprüche 1 bis 8, dadurch gekennzeichnet, daß auf die Außenseite der Deckschicht (3) beziehungsweise (3') eine Transportschutzfolie aufgebracht ist.